# EUROPÄISCHE PATENTSCHRIFT

(11) **EP 4 047 326 B1**
(45) Veröffentlichungstag und Bekanntmachung des Hinweises auf die Patenterteilung: **01.11.2023**
(21) Anmeldenummer: 21213963.8
(22) Anmeldetag: 13.12.2021
(51) Int. Cl.: G01V 8/12, G01D 11/26

(54) **SENSORANORDNUNG**
SENSOR ARRANGEMENT
AGENCEMENT DE CAPTEUR

(30) Priorität: 23.02.2021 DE 202021100883 U
(43) Veröffentlichungstag der Anmeldung: 24.08.2022
(73) Patentinhaber: Leuze electronic GmbH + Co. KG, 73277 Owen/Teck (DE)
(72) Erfinder: Ullmann, Thomas, 88348 Bad Saulgau (DE); Bauer, Matthias, 73779 Deizisau (DE)
(74) Vertreter: Ruckh, Rainer Gerhard

(56) Entgegenhaltungen:
- EP-B1- 3 168 643
- DE-U1-202010 013 843
- US-A1- 2014 064 825
- US-B2- 6 982 410

## Beschreibung

Die Erfindung betrifft eine Sensoranordnung gemäß dem Oberbegriff des Anspruchs 1.

Derartige Sensoranordnungen werden in unterschiedlichen industriellen Applikationen zu Überwachungszwecken eingesetzt.

Hierzu weist die Sensoranordnung einen optischen Sensor auf, mittels dessen Objektdetektionen in einem Überwachungsbereich durchgeführt werden können. Derartige optische Sensoren können beispielsweise in Form von Lichtschranken, Lichttastern, Reflexionslichtschrauben, Distanzsensoren und dergleichen ausgebildet sein.

Mit derartigen optischen Sensoren werden in industriellen Applikationen Objektüberwachungen insbesondere an Anlagen wie zum Beispiel Maschinen, Förderanlagen, fahrerlosen Systemen und dergleichen durchgeführt. Hierzu muss der optische Sensor mit einer geeigneten Halterung an der Anlage befestigt werden.

Nachteilig hierbei ist, dass derartige Halterungen oft einen konstruktiv aufwändigen Aufbau aufweisen und dabei einen relativ großen Einbauraum an der Anlage benötigen. Zudem ist nachteilig, dass derartige Halterungen nur in einer bestimmten Einbaulage an einer Anlagenfläche montiert werden können, was zu unerwünschten Einschränkungen der Sensoranordnung in der jeweiligen Applikation führen kann.

Die DE 20 2010 013 843 U1 betrifft eine optische Sensorvorrichtung, umfassend ein Gehäuse, eine in dem Gehäuse angeordnete optische Einrichtung, welche eine Lichtsendeeinrichtung und/oder Lichtempfangseinrichtung und/oder Lichtabbildungseinrichtung aufweist, mindestens ein an dem Gehäuse angeordnetes oder gebildetes lichtdurchlässiges Fenster, und eine an dem Gehäuse angeordnete Fixierungseinrichtung zur Fixierung des Gehäuses an einer Anwendung. An der Fixierungseinrichtung ist mindestens ein Halter fixiert, welcher mindestens ein Element hält, welches außerhalb des Gehäuses vor dem mindestens einen Fenster angeordnet ist

Die US 2014/0064825 A1 betrifft eine Befestigungsvorrichtung mit einem Basisteil zum Befestigen und/oder Justieren eines Lichtgittergehäuses mit einem teilrunden Gehäusequerschnitt in einem Gehäuseabschnitt an einem Montagekörper, wobei das Basisteil eine offene Aufnahme für das Lichtgittergehäuse aufweist, wobei die runde Aufnahme im Querschnitt einen Kreisabschnitt bildet und der Kreisabschnitt einen Winkel von mehr als 180 Grad aufweist, wobei das Lichtgittergehäuse in der Aufnahme angeordnet ist und von der Aufnahme durch Kraftschluss gehalten ist.

Die EP 3 168 643 B1 betrifft eine Vorrichtung zum Befestigen eines optischen Sensors an einem Kraftfahrzeug, beinhaltend einen Halterahmen, der einen Aufnahmeraum für den optischen Sensor aufweist und der am Kraftfahrzeug anordenbar ist, mit einer Lagervorrichtung, mit deren Hilfe der optische Sensor um eine Schwenkachse neigbar am Halterahmen gehalten wird, und mit einer Einstellvorrichtung zum Einstellen einer Neigung des optischen Sensors um die Schwenkachse, wobei die Einstellvorrichtung eine Stellschraube aufweist, die so gestaltet ist, dass durch die Drehung der Stellschraube die Einstellung der Neigung des optischen Sensors mit Hilfe der Einstellvorrichtung erfolgt, wobei die Stellschraube einen ersten Bereich mit einem ersten Gewinde, das in ein entsprechendes Gewinde eines ersten Bewegungselements der Einstellvorrichtung eingreift, und einen zweiten Bereich mit einem zweiten Gewinde, das in ein entsprechendes Gewinde eines zweiten Bewegungselements der Einstellvorrichtung eingreift, aufweist, wobei das erste Gewinde und das zweite Gewinde voneinander verschiedene Steigungen aufweisen. Das Erste Bewegungselement weist eine erste Gewindemutter mit dem dem ersten Gewinde entsprechenden Gewinde und ein erstes Hüllelement, das die erste Gewindemutter zumindest in bestimmten Bereichen umgibt, auf und dass das zweite Bewegungselement eine zweite Gewindemutter mit dem dem zweiten Gewinde entsprechenden Gewinde und ein zweites Hüllelement, das die zweite Gewindemutter zumindest in bestimmten Bereichen umgibt, aufweist und dass das erste Hüllelement und das zweite Hüllelement so ausgebildet sind, dass das zweite Hüllelement das erste Hüllelement bei der Bewegung des ersten Bewegungselements relativ zum zweiten Bewegungselement zumindest in bestimmten Bereichen umgibt.

Die US 6 982 410 B2 betrifft einen photoelektrischen Sensor, auf dessen Gehäuse eine Zusatzeinheit mit einer Linse aufclipsbar ist.

Der Erfindung liegt die Aufgabe zugrunde eine Sensoranordnung mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor und einer Halterung, welche zur Aufnahme des optischen Sensors ausgebildet ist. Der optische Sensor weist in einem Gehäuse angeordnete Sensorkomponenten auf, welche Lichtstrahlen emittieren und/oder empfangen, wobei eine Frontwand des Gehäuses eine Lichtaustrittsfläche ausbildet, durch welche die Lichtstrahlen geführt sind. Die Halterung weist Befestigungsmittel auf, mittels derer eine Befestigung an einer Unterlage in zwei Befestigungsebenen durchführbar ist. Die Halterung weist eine transparente Abdeckscheibe auf, welche bei in der Halterung aufgenommenen optischen Sensor vor der Lichtaustrittsfläche liegt. Die Halterung weist Buchsen zur Aufnahme von Befestigungsmitteln auf, mittels derer eine Befestigung an einer Unterlage in einer ersten Befestigungsebene durchführbar ist. Zwei Buchsen sind an gegenüberliegenden Seiten der Halterung vorgesehen, wobei die Buchsen entlang einer Schwenkachse angeordnet sind. Damit kann die Orientierung der Halterung durch Schwenkbewegungen auf einfache Weise variiert werden.

Ein wesentlicher Vorteil der erfindungsgemäßen Sensoranordnung besteht darin, dass die Halterung zwei unterschiedliche Befestigungsebenen ausbildet, das heißt die Halterung kann in unterschiedlichen Befestigungsebenen an einer Unterlage, beispielsweise an einer Anlagefläche einer Anlage, an welcher der optische Sensor Überwachungsfunktionen ausführt, befestigt werden. Damit können unterschiedliche Einbaulagen des optischen Sensors realisiert werden, wodurch eine besonders einfache und flexible Anpassung an unterschiedliche Applikationen möglich ist.

Ein weiterer Vorteil der erfindungsgemäßen Sensoranordnung besteht darin, dass die Halterung eine Abdeckscheibe aufweist, die eine Schutzabdeckung für die Lichtaustrittsfläche des in der Halterung gelagerten optischen Sensors ausbildet.

Da die Abdeckscheibe transparent ist, behindert sie den Strahlengang der durch die Lichtaustrittsfläche geführten Lichtstrahlen nicht. Die Abdeckscheibe sorgt einerseits für einen mechanischen Schutz des optischen Sensors gegen Stoß- und Schlageinwirkungen. Weiterhin verhindert die Abdeckscheibe ein Verschmutzen der Lichtaustrittsfläche, da von der Abdeckscheibe Staub-, Schmutzpartikel und auch Feuchtigkeit abgehalten wird.

Die Abdeckscheibe weist eine vorzugsweise gegenüber der Horizontalen geneigte Orientierung auf, so dass bereits infolge der Schwerkraft Staub- und Schmutzpartikel von dieser selbsttätig oder leichter durch Abwischen gelöst werden können.

Zweckmäßig verläuft hierzu die Abdeckscheibe in einer Ebene, die in einem Neigungswinkel zur Lichtaustrittsfläche des in der Halterung fixierten optischen Sensor orientiert ist.

Weiter vorteilhaft erstreckt sich die Abdeckscheibe über den gesamten Bereich der Lichtaustrittsfläche des optischen Sensors.

Damit gewährleistet die Abdeckscheibe einen vollständigen, flächendeckenden Schutz der Lichtaustrittsfläche des optischen Sensors.

Erfindungsgemäß weist die Halterung Buchsen zur Aufnahme von Befestigungsmitteln auf, mittels derer eine Befestigung an einer Unterlage in einer ersten Befestigungsebene durchführbar ist.

Dabei sind zwei Buchsen an gegenüberliegenden Seiten der Halterung vorgesehen.

Die Buchsen, die vorzugsweise identisch ausgebildet sind, liegen mit ihren Öffnungen frei, so dass dort die Befestigungsmittel zur Fixierung der Halterung an feststehenden Unterlagen, insbesondere Anlagenteilen, fixiert werden können. Die Befestigungsmittel können in Form von Schrauben oder Klipps ausgebildet sein.

Erfindungsgemäß kann die Halterung in einer weiteren Befestigungsebene an einer Unterlage fixiert werden.

Hierzu sind an einem in einer zweiten Befestigungsebene liegende Segment der Halterung Befestigungslöcher zur Aufnahme von Befestigungsmitteln vorgesehen.

Zweckmäßig ist das Segment plattenförmig ausgebildet.

Das so ausgebildete Segment bildet eine ebene Anlagefläche aus, mit der die Halterung an einer Unterlage fixiert werden kann.

Auch in diesem Fall sind die Befestigungsmittel von Schrauben oder Klipps gebildet.

Gemäß einer alternativen Ausgestaltung sind in einer zweiten Befestigungsebene Bajonettverschlussmittel vorgesehen.

Auch in diesem Fall befinden sich die Befestigungsmittel ausbildenden Bajonettverschlussmittel an einem plattenförmigen Segment der Halterung, das an einer Unterlage fixiert werden kann.

Der Vorteil dieser Variante besteht darin, dass der Bajonettverschluss zur Fixierung an der Unterlage werkzeuglos realisiert werden kann.

Gemäß einer vorteilhaften Ausführungsform kann der optische Sensor mittels Spann-, Klemm- oder Rastmitteln in der Halterung fixiert werden.

Dabei ist der optische Sensor in einer vorgegebenen Lagerposition in der Halterung gelagert.

Der optische Sensor kann somit ohne Einsatz von Werkzeugen in der Halterung fixiert werden. Besonders vorteilhaft ist, dass der optische Sensor in einer definierten Sollposition in der Halterung gelagert wird, wodurch eine reproduzierbare, definierte Einbauposition des optischen Sensors erhalten wird. Diese Sollposition wird vorteilhaft durch eine an die Außenkontur des optischen Sensors angepasste Kontur der Halterung realisiert.

Besonders vorteilhaft weist die Halterung einen elastischen Spannhaken zur Aufnahme des optischen Sensors auf.

Die Halterung besitzt außerdem Bohrungen um den Sensor bei extremen Vibrationsbelastungen mit Schrauben zu sichern.

Dies stellt eine konstruktiv besonders einfache und leicht handhabbare Möglichkeit der Fixierung des optischen Sensors in der Halterung dar.

Prinzipiell kann der optische Sensor nach dem Lichtschrankenprinzip arbeiten, sodass in einem ersten Gehäuse ein Lichtstrahlen emittierender Sender und in einem zweiten Gehäuse ein Lichtstrahlen empfangender Empfänger integriert sind.

Dann kann jedes Gehäuse des optischen Sensors in einer separaten Halterung gelagert werden.

Besonders vorteilhaft weist der optische Sensor als Sensorkomponenten einen Sendelichtstrahlen emittierenden Sender und einen Empfangslichtstrahlen empfangenden Empfänger auf.

Der optische Sensor kann dann als Lichttaster, Reflexionslichtschranke, Distanzsensor und dergleichen ausgebildet sein.

Dabei kann der optische Sensor insbesondere derart ausgestaltet sein, dass die Sendelichtstrahlen und Empfangslichtstrahlen durch räumlich getrennte Bereiche der Lichtaustrittsfläche geführt sind.

In diesem Fall ist die Halterung besonders vorteilhaft derart an den optischen Sensor angepasst, dass an den Abdeckschreiben ein lichtundurchlässiger Steg vorgesehen ist, der die Sendelichtstrahlen und Empfangslichtstrahlen trennt.

Mit diesem Steg werden ein Übersprechen zwischen den Sendelichtstrahlen und Empfangslichtstrahlen und dadurch bedingte Fehldetektionen des optischen Sensors weitgehend vermieden, das heißt die Halterung verbessert die Nachweissicherheit und damit die Funktionalität des optischen Sensors.

Die Erfindung wird im Folgenden anhand der Zeichnungen erläutert. Es zeigen:
Figur 1: Erste perspektivische Darstellung eines Ausführungsbeispiels der erfindungsgemäßen Sensoranordnung.
Figur 2: Zweite perspektivische Darstellung eines Ausführungsbeispiels der erfindungsgemäßen Sensoranordnung.
Figur 3: Schematische Darstellung des optischen Sensors der Sensoranordnung gemäß den Figuren 1 und 2.
Figur 4: Perspektivische Darstellung einer Lichttrennung bei der Ausführungsform der Figuren 1 und 2.
Figur 5: Draufsicht auf die Anordnung gemäß Figur 4.
Figur 6: Einzeldarstellung eines Befestigungsmittels in Form eines Klipps für die Sensoranordnung gemäß den Figuren 1 und 2.
Figur 7: Teildarstellung einer Halterung für eine weitere Variante der Sensoranordnung.
Figur 8: Einzeldarstellung eines Blechs für die Anordnung gemäß Figur 7.

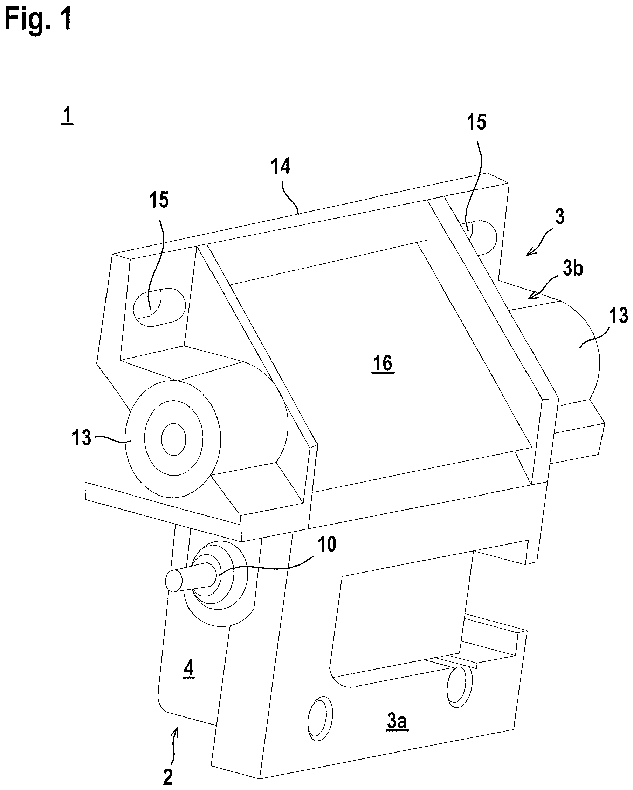

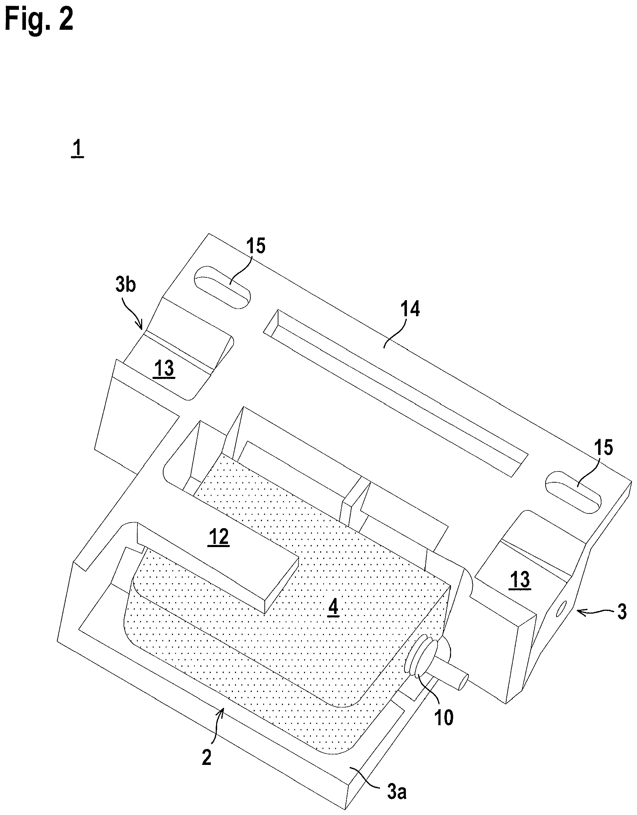

Die Figuren 1 und 2 zeigen ein Ausführungsbeispiel der erfindungsgemäßen Sensoranordnung 1. Die Sensoranordnung 1 umfasst einen optischen Sensor 2 und eine Halterung 3, in der der optische Sensor 2 gelagert werden kann und welche an einer Unterlage fixiert werden kann.

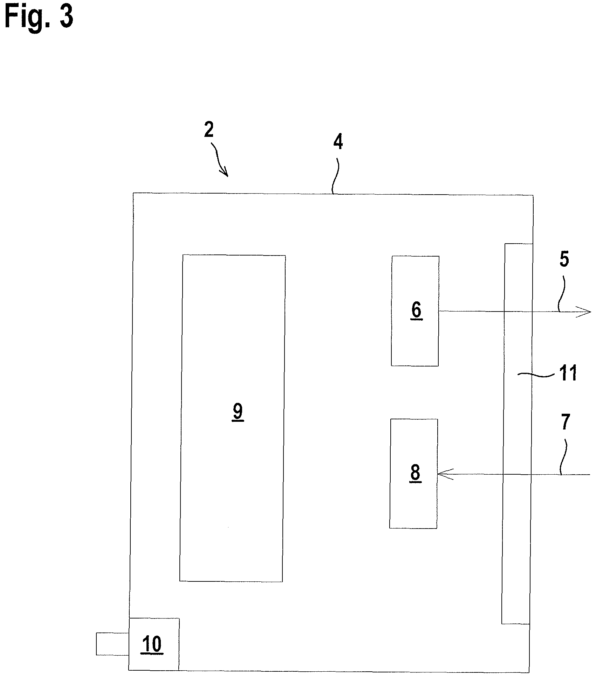

Figur 3 zeigt eine schematische Darstellung des optischen Sensors 2 der im vorliegenden Fall als Lichttaster ausgebildet ist. Die Komponenten des optischen Sensors 2 sind in einem im wesentlichen kubischen Gehäuse 4 integriert. Der optische Sensor 2 weist als Sensorkomponenten einen Sendelichtstrahlen 5 emittierenden Sender 6 und einen Empfangslichtstrahlen 7 empfangenden Empfänger 8 auf. Der Sender 6 kann zum Beispiel von einer Leuchtdiode gebildet sein, der Empfänger 8 von einer Photodiode. Dem Sender 6 und Empfänger 8 können nicht dargestellte Optiken zum Beispiel in Form von Linsen zugeordnet sein, die zur Strahlformung der Sendelichtstrahlen 5 und Empfangslichtstrahlen 7 dienen. Im Gehäuse 4 befindet sich weiterhin eine Auswerteeinheit 9, die in Form eines Mikroprozessors oder dergleichen gebildet sein kann. Die Auswerteeinheit 9 dient zur Steuerung des Senders 6. Zudem wird in der Auswerteeinheit 9 in Abhängigkeit von im Empfänger 8 generierten Empfangssignalen ein Objektfeststellungssignal generiert, dessen Signalzustände angeben, ob sich ein Objekt innerhalb eines vom optischen Sensor 2 überwachten Überwachungsbereich befindet oder nicht. Das Objektfeststellungssignal wird über einen Ausgang ausgegeben, der in einem Anschluss 10, insbesondere einem Stecker integriert ist, über welchen auch die Stromversorgung des optischen Sensors 2 erfolgt.

Zur Durchführung der Überwachungsfunktion werden die Sendelichtstrahlen 5 durch ein eine Lichtaustrittsfläche ausbildendes Austrittsfenster 11 in den Überwachungsbereich geführt. Von einem Objekt im Überwachungsbereich werden die Sendelichtstrahlen 5 als Empfangslichtstrahlen 7 zurück zum optischen Sensor 2 geführt und gelangen durch das Austrittsfenster 11 zum Empfänger 8. Wie Figur 3 zeigt, durchsetzen die Sendelichtstrahlen 5 und Empfangslichtstrahlen 7 unterschiedliche Bereiche der Lichtaustrittsfläche.

Die Halterung 3 besteht vorteilhaft aus einem glasfaserverstärktem Kunststoff. Dabei weist die Halterung 3, wie die Figuren 1 und 2 zeigen, ein U-Profil-Segment 3a auf, welches zur Anlage einer Seitenwand des Gehäuses 4 des optischen Sensors 2 dient. Am U-Profil-Segment 3a mündet ein elastisch verformbarer Spannhaken 12 aus (Figur 2). Dieser bildet eine Spann- oder Klemmverbindung aus, mit der der optische Sensor 2 in einer Sollposition, das heißt einer vorgegebenen Lagerposition in der Halterung 3 gelagert werden kann, wie in den Figuren 1 und 2 dargestellt. Außerdem kann er durch Schrauben gesichert werden.

An das U-Profil-Segment 3a der Halterung 3 schließt ein Anschlussteil 3b der Halterung 3 an. An dem Anschlussteil 3b sind zwei identische, koaxial entlang einer Schwenkachse angeordnete Buchsen 13 vorgesehen. In diese Buchsen 13 können Befestigungsmittel eingeführt werden, um die Halterung 3 an einer Unterlage wie zum Beispiel einem Anlagenteil zu fixieren.

Das Anschlussteil 3b umfasst weiterhin ein plattenförmiges Segment 14 in welchem zwei Langlöcher 15 vorgesehen sind. Das plattenförmige Segment 14 weist eine ebene Anlagefläche zur Anlage an einer Unterlage, an der die Halterung 3 zu befestigen ist, auf. In die Langlöcher 15 des plattenförmigen Segments 14 können Befestigungsmittel wie zum Beispiel Befestigungsschrauben 15a zur Fixierung an der Unterlage eingeführt werden.

Mit den Buchsen 13 einerseits und dem plattenförmigen Segment 14 mit den Langlöchern 15 andererseits wird eine Befestigung der Halterung 3 an einer Unterlage in zwei Befestigungsebenen ermöglicht.

Am Anschlussteil 3b der Halterung 3 ist weiterhin eine transparente Abdeckscheibe 16, die durchlässig für die Sendelichtstrahlen 5 und Empfangslichtstrahlen 7 ist, vorgesehen. Die ebene Abdeckscheibe 16 liegt in Abstand vor der Lichtaustrittsfläche des in der Halterung 3 gelagerten optischen Sensors 2.

Die Abdeckscheibe 16 deckt dabei das komplette Vorfeld vor der Lichtaustrittsfläche ab und schützt diese gegen Schlag- und Stoßeinwirkungen. Weiterhin schützt die Abdeckscheibe 16 die Lichtaustrittsfläche gegen Verschmutzungen wie Staub und auch gegen Feuchtigkeit.

Wie die Figuren 1 und 2 zeigen, verläuft die Ebene der Abdeckscheibe 16 geneigt zur Ebene der Lichtaustrittsfläche. Weiterhin verläuft die Abdeckscheibe 16 geneigt zur Horizontalen, wenn die Halterung 3 an einer Unterlage fixiert ist. Durch die geneigte Lage der Abdeckscheibe 16 lösen sich von dieser Schmutz- und Staubpartikel, insbesondere auch bedingt durch die Schwerkraft, leicht ab.

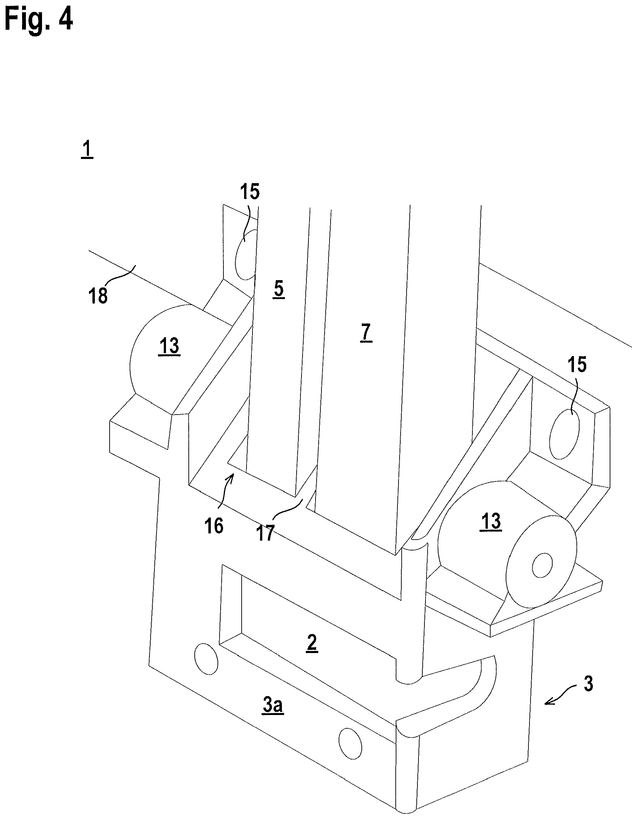

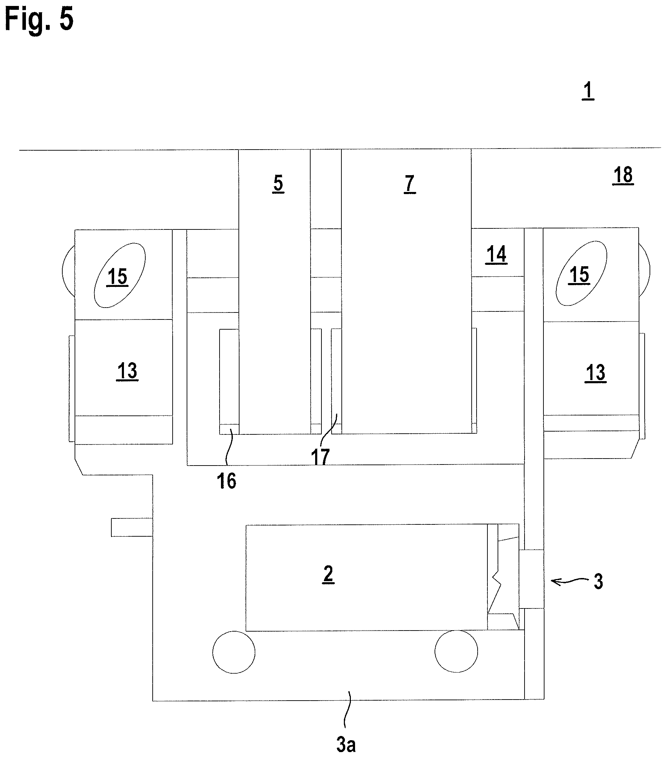

Die Figuren 4 und 5 zeigen detaillierter die Halterung 3 der erfindungsgemäßen Sensoranordnung 1. Am Halter ist ein lichtundurchlässiger Steg 17 vorgesehen, der die Sendelichtstrahlen 5 und Empfangslichtstrahlen 7, die über räumlich getrennte Bereiche der Lichtaustrittsfläche des optischen Sensors 2 geführt sind, optisch trennt. Ansonsten entspricht die Ausführungsform gemäß den Figuren 4 und 5 der Ausführungsform der Figuren 1 und 2.

Wie aus den Figuren 4 und 5 ersichtlich, ist im vorliegenden Fall die Halterung 3 an einer Unterlage in Form eines Trägers 18 befestigt. Die Befestigung erfolgt dadurch, dass Befestigungsmittel bildende Befestigungsschrauben 15a durch die Langlöcher 15 des plattenförmigen Segments 14 geführt sind und im Träger 18 verankert sind.

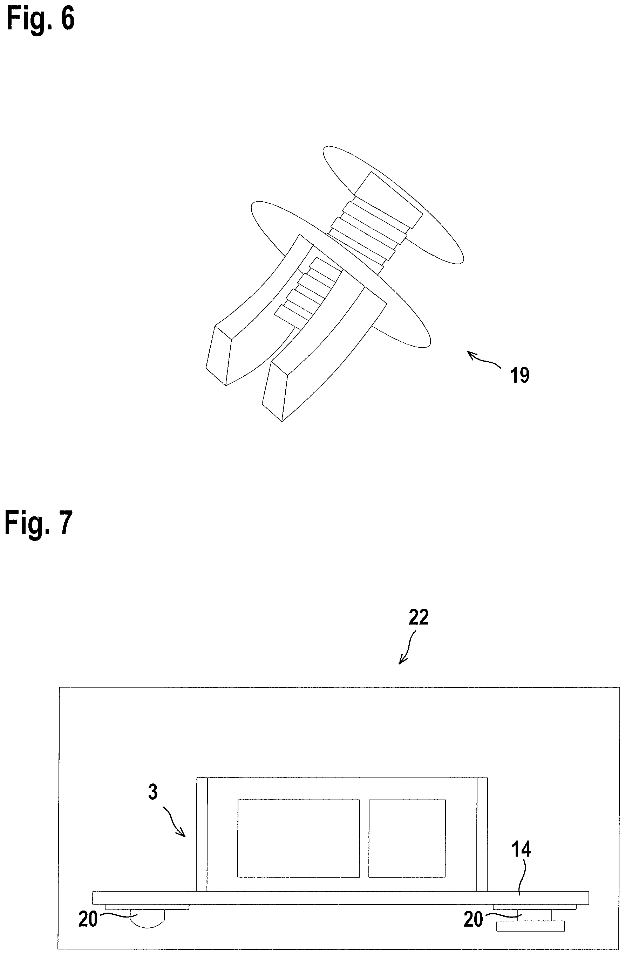

Anstelle von Befestigungsmitteln in Form von Schrauben können generell auch Klipps 19 wie in Figur 6 dargestellt verwendet werden.

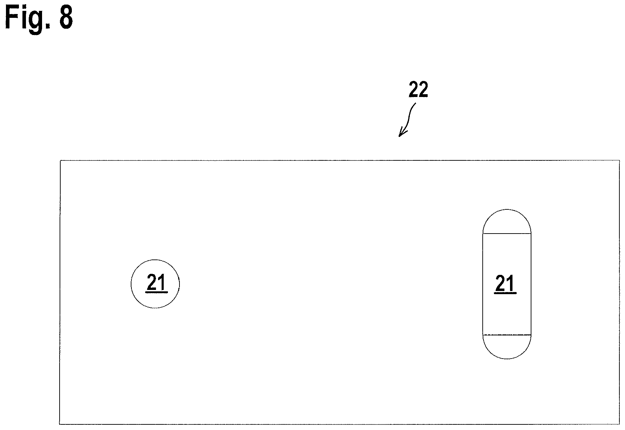

Figur 7 zeigt einen Ausschnitt einer weiteren Ausführungsform der Halterung 3 für die Sensoranordnung 1. In diesem Fall befinden sich Bajonettverschlussmittel 20 an dem plattenförmigen Segment 14. Diese Bajonettverschlussmittel 20 können in Löcher 21 einer Blechplatte 22 (Figur 8) als Bestandteil der Unterlage eingedreht werden.

### Bezugszeichenliste

- (1): Sensoranordnung
- (2): Optischer Sensor
- (3): Halterung
- (3a): U-Profil-Segment
- (3b): Anschlussteil
- (4): Gehäuse
- (5): Sendelichtstrahlen
- (6): Sender
- (7): Empfangslichtstrahlen
- (8): Empfänger
- (9): Auswerteeinheit
- (10): Anschluss
- (11): Austrittsfenster
- (12): Spannhaken
- (13): Buchse
- (14): Segment
- (15): Langloch
- (15a): Befestigungsschraube
- (16): Abdeckscheibe
- (17): Steg
- (18): Träger
- (19): Klipp
- (20): Bajonettverschlussmittel
- (21): Loch
- (22): Blechplatte

## Patentansprüche

1. Sensoranordnung (1) mit einem optischen Sensor (2) und einer Halterung (3), welche zur Aufnahme des optischen Sensors (2) ausgebildet ist, wobei der optische Sensor (2) in einem Gehäuse (4) angeordnete Sensorkomponenten aufweist, welche Lichtstrahlen emittieren und/oder empfangen, wobei eine Frontwand des Gehäuses (4) eine Lichtaustrittsfläche ausbildet, durch welche die Lichtstrahlen geführt sind, **dadurch gekennzeichnet, dass** die Halterung (3) Befestigungsmittel aufweist, mittels derer eine Befestigung an einer Unterlage in zwei Befestigungsebenen durchführbar ist, dass die Halterung (3) eine transparente Abdeckscheibe (16) aufweist, welche bei dem in der Halterung (3) aufgenommenen optischen Sensor (2) vor der Lichtaustrittsfläche liegt, und dass die Halterung (3) Buchsen (13) zur Aufnahme von Befestigungsmitteln aufweist, mittels derer eine Befestigung an einer Unterlage in einer ersten Befestigungsebene durchführbar ist, wobei zwei Buchsen (13) an gegenüberliegenden Seiten der Halterung (3) vorgesehen sind, wobei die Buchsen (13) entlang einer Schwenkachse angeordnet sind.

2. Sensoranordnung (1) nach Anspruch 1, **dadurch gekennzeichnet, dass** ein an einem in einer zweiten Befestigungsebene liegenden Segment (13) der Halterung (3) Befestigungslöcher zur Aufnahme von Befestigungsmitteln vorgesehen sind.

3. Sensoranordnung (1) nach Anspruch 2, **dadurch gekennzeichnet, dass** das Segment (13) plattenförmig ausgebildet ist.

4. Sensoranordnung (1) nach einem der Ansprüche 1 bis 3, **dadurch gekennzeichnet, dass** die Befestigungsmittel von Schrauben oder Klipps (19) gebildet sind.

5. Sensoranordnung (1) nach einem der Ansprüche 1 bis 4, **dadurch gekennzeichnet, dass** in einer zweiten Befestigungsebene Bajonettverschlussmittel (20) vorgesehen sind.

6. Sensoranordnung (1) nach einem der Ansprüche 1 bis 5, **dadurch gekennzeichnet, dass** der optische Sensor (2) mittels Spann-, Klemm- oder Rastmitteln in der Halterung (3) fixierbar ist.

7. Sensoranordnung (1) nach Anspruch 6, **dadurch gekennzeichnet, dass** der optische Sensor (2) in einer vorgegebenen Lagerposition in der Halterung (3) gelagert ist.

8. Sensoranordnung (1) nach einem der Ansprüche 6 oder 7, **dadurch gekennzeichnet, dass** die Halterung (3) einen elastischen Spannhaken (12) zur Aufnahme des optischen Sensors (2) aufweist.

9. Sensoranordnung nach Anspruch 8, **dadurch gekennzeichnet, dass** der optische Sensor (2) zusätzlich durch Schrauben gesichert werden kann.

10. Sensoranordnung (1) nach einem der Ansprüche 1 bis 9, **dadurch gekennzeichnet, dass** die Abdeckscheibe (16) in einer Ebene verläuft, die in einem Neigungswinkel zur Lichtaustrittsfläche des in der Halterung (3) fixierten optischen Sensors (2) orientiert ist.

11. Sensoranordnung (1) nach Anspruch 10, **dadurch gekennzeichnet, dass** sich die Abdeckscheibe (16) über den gesamten Bereich der Lichtaustrittsfläche des optischen Sensors (2) erstreckt.

12. Sensoranordnung (1) nach einem der Ansprüche 1 bis 11, **dadurch gekennzeichnet, dass** der optische Sensor (2) als Sensorkomponente einen Sendelichtstrahlen (5) emittierenden Sender (6) und einen Empfangslichtstrahlen (7) empfangenden Empfänger (8) aufweist.

13. Sensoranordnung (1) nach Anspruch 12, **dadurch gekennzeichnet, dass** die Sendelichtstrahlen (5) und Empfangslichtstrahlen (7) durch räumlich getrennte Bereiche der Lichtaustrittsfläche geführt sind.

14. Sensoranordnung (1) nach Anspruch 13, **dadurch gekennzeichnet, dass** an den Abdeckscheiben (16) ein lichtundurchlässiger Steg (17) vorgesehen ist, der die Sendelichtstrahlen (5) und Empfangslichtstrahlen (7) trennt.

## Claims

1. A sensor arrangement (1) having an optical sensor (2) and a holder (3) which is designed to receive the optical sensor (2), the optical sensor (2) having sensor components which are arranged in a housing (4) and emit and/or receive light beams, a front wall of the housing (4) forming a light exit surface through which the light beams are guided, **characterised in that** the holder (3) has fastening means which enable fastening to a base in two fastening planes, **in that** the holder (3) has a transparent cover disc (16) which, in the case of the optical sensor (2) accommodated in the holder (3), lies in front of the light exit surface, and **in that** the holder (3) has bushes (13) for accommodating fastening means, to enable fastening to a base in a first fastening plane, two bushes (13) being provided on opposite sides of the holder (3), the bushes (13) being arranged along a pivot axis.

2. A sensor arrangement (1) according to claim 1, **characterised in that** a segment (13) of the holder (3) lying in a second fastening plane is provided with fastening holes for receiving fastening means.

3. A sensor arrangement (1) according to claim 2, **characterised in that** the segment (13) is pl ate-shaped.

4. A sensor arrangement (1) according to one of the claims 1 to 3, **characterised in that** the fastening means are formed by screws or clips (19).

5. A sensor arrangement (1) according to one of claims 1 to 4, **characterised in that** bayonet locking means (20) are provided in a second fastening plane.

6. A sensor arrangement (1) according to one of the claims 1 to 5, **characterised in that** the optical sensor (2) can be fixed in the holder (3) by means of clamping or latching means.

7. A sensor arrangement (1) according to claim 6, **characterised in that** the optical sensor (2) is mounted in a predetermined bearing position in the holder (3).

8. A sensor arrangement (1) according to one of claims 6 or 7, **characterised in that** the holder (3) has an elastic tensioning hook (12) for receiving the optical sensor (2).

9. A sensor arrangement according to claim 8, **characterised in that** the optical sensor (2) can additionally be secured by screws.

10. A sensor arrangement (1) according to one of the claims 1 to 9, **characterised in that** the cover plate (16) runs in a plane which is oriented at an angle of inclination to the lightemitting surface of the optical sensor (2) fixed in the holder (3).

11. A sensor arrangement (1) according to claim 10, **characterised in that** the cover plate (16) extends over the entire area of the light emission surface of the optical sensor (2).

12. A sensor arrangement (1) according to one of the claims 1 to 11, **characterised in that** the optical sensor (2) has as sensor component a transmitter (6) emitting transmitted light beams (5) and a receiver (8) receiving received light beams (7).

13. A sensor arrangement (1) according to claim 12, **characterised in that** the transmitted light beams (5) and received light beams (7) are guided through spatially separated regions of the light exit surface.

14. A sensor arrangement (1) according to claim 13, **characterised in that** an opaque web (17) is provided on the cover plates (16), which web separates the transmitted light beams (5) and received light beams (7).

## Revendications

1. Agencement de capteur (1) comportant un capteur optique (2) et un support (3) destiné à recevoir le capteur optique (2), le capteur optique (2) comportant des composants de capteur disposés dans un boîtier (4) et émettant et/ou recevant des faisceaux lumineux, une paroi frontale du boîtier (4) formant une surface de sortie de la lumière à travers laquelle les faisceaux lumineux sont guidés, **caractérisé en ce que** le support (3) comprend des moyens de fixation au moyen desquels la fixation à une base peut être effectuée dans deux plans de fixation, **en ce que** le support (3) comprend un disque de recouvrement transparent (16) qui, dans le cas du capteur optique (2) logé dans le support (3), se trouve devant la surface de sortie de la lumière, et **en ce que** le support (3) comprend des douilles (13) pour loger des moyens de fixation, au moyen desquels la fixation à une base peut être effectuée dans un premier plan de fixation, deux douilles (13) étant prévues sur les côtés opposés du support (3), les douilles (13) étant disposées le long d'un axe de pivotement.

2. Agencement de capteur (1) selon la revendication 1, **caractérisé par le fait qu'**un segment (13) du support (3) situé dans un second plan de fixation est pourvu de trous de fixation destinés à recevoir des moyens de fixation.

3. Agencement de capteur (1) selon la revendication 2, **caractérisé en ce que** le segment (13) est en forme de plaque.

4. Agencement de capteur (1) selon l'une des revendications 1 à 3, **caractérisé en ce que** les moyens de fixation sont constitués par des vis ou des clips (19).

5. Agencement de capteur (1) selon l'une des revendications 1 à 4, **caractérisé en ce que** les moyens de verrouillage à baïonnette (20) sont prévus dans un second plan de fixation.

6. Agencement de capteur (1) selon l'une des revendications 1 à 5, **caractérisé en ce que** le capteur optique (2) peut être fixé dans le support (3) au moyen d'un dispositif de serrage ou d'encliquetage.

7. Agencement de capteur (1) selon la revendication 6, **caractérisé en ce que** le capteur optique (2) est monté dans une position d'appui prédéterminée dans le support (3).

8. Agencement de capteur (1) selon l'une des revendications 6 ou 7, **caractérisé en ce que** le support (3) comprend un crochet de tension élastique (12) destiné à recevoir le capteur optique (2).

9. Agencement de capteur selon la revendication 8, **caractérisé en ce que** le capteur optique (2) peut en outre être fixé par des vis.

10. Agencement de capteur (1) selon l'une des revendications 1 à 9, **caractérisé en ce que** la plaque de recouvrement (16) s'étend dans un plan orienté selon un angle d'inclinaison par rapport à la surface émettrice de lumière du capteur optique (2) fixé dans le support (3).

11. Agencement de capteur (1) selon la revendication 10, **caractérisé en ce que** la plaque de recouvrement (16) s'étend sur toute la surface d'émission de lumière du capteur optique (2).

12. Agencement de capteur (1) selon l'une des revendications 1 à 11, **caractérisé en ce que** le capteur optique (2) comprend comme élément de détection un émetteur (6) émettant des faisceaux lumineux transmis (5) et un récepteur (8) recevant des faisceaux lumineux reçus (7).

13. Agencement de capteur (1) selon la revendication 12, **caractérisé en ce que** les faisceaux lumineux transmis (5) et les faisceaux lumineux reçus (7) sont guidés à travers des régions spatialement séparées de la surface de sortie de la lumière.

14. Agencement de capteur (1) selon la revendication 13, **caractérisé en ce qu'**une bande opaque (17) est prévue sur les plaques de recouvrement (16), laquelle bande sépare les faisceaux lumineux transmis (5) et les faisceaux lumineux reçus (7).
